# EUROPÄISCHE PATENTSCHRIFT

(11) **EP 2 180 185 B1**
(45) Veröffentlichungstag und Bekanntmachung des Hinweises auf die Patenterteilung: **04.12.2013**
(21) Anmeldenummer: 09172115.9
(22) Anmeldetag: 02.10.2009
(51) Int. Cl.: F04B 43/00, F04B 43/02, G01L 19/10, G01L 19/12

(54) **Membranbruchanzeige**
Membrane breakage display
Affichage de rupture de membrane

(30) Priorität: 24.10.2008 DE 102008053050
(43) Veröffentlichungstag der Anmeldung: 28.04.2010
(73) Patentinhaber: ProMinent Dosiertechnik GmbH, 69123 Heidelberg (DE)
(72) Erfinder: Bubb, Alexander, 68723 Plankstadt (DE); Arnold, Christian, 69469 Weinheim (DE); Freissler, Bernd, 69234 Dielheim (DE)
(74) Vertreter: Weber, Roland

(56) Entgegenhaltungen:
- EP-A1- 0 460 386
- DE-A1- 3 334 638
- DE-A1- 3 931 516
- US-A- 4 654 643
- US-A- 5 237 957

## Beschreibung

Die Erfindung betrifft eine Einrichtung für die Anzeige eines Membranbruchs in einer Membranpumpe oder eines Überdrucks in einem druckführenden System, insbesondere in druckführenden Leitungen oder Druckbehältern, oder einer Leckage an einem druckführenden System, insbesondere an einer Pumpe. Die Anzeige wird dabei durch ein Anzeigeelement bewirkt, das bei einem Membranbruch, einem Überdruck oder einer Leckage seine Position verändert. Es handelt sich um eine mechanisch/optische Anzeigeeinrichtung.

Membranpumpen werden vielfach zum Fördern von aggressiven, schädlichen oder gar giftigen Medien eingesetzt. Der Bruch der Membran, die den Verdränger in der Pumpe darstellt, kann ohne weitere Maßnahmen dazu führen, dass Fördermedium aus dem vorgesehenen Bereich für die Strömung des Mediums austritt und möglicherweise sogar die Pumpe verlässt. Diese Problematik hat dazu geführt, dass Konstruktionen mit zwei Membranen entwickelt worden sind. Bei einer solchen Konstruktion befindet sich hinter der Arbeitsmembran, die mit dem Fördermedium in Kontakt steht, eine zweite Membran als Sicherheitsmembran, die mechanisch mit der Arbeitsmembran gekoppelt ist und sich mit dieser mitbewegt. Beim Bruch der Arbeitsmembran verhindert die Sicherheitsmembran, dass Fördermedium aus der Pumpkammer austritt. Dabei füllt sich der Zwischenraum zwischen der Arbeitsmembran und der Sicherheitsmembran, der jedoch gegenüber der Umgebung dicht abgeschlossen ist. Ein weiterer Betrieb der Pumpe bleibt möglich, da sich die Sicherheitsmembran wie die Arbeitsmembran bewegt und so eine Fortsetzung des Förderns bewirkt. Eine Ausführung der vorbeschriebenen Art mit zwei Membranen ist z.B. in der DE 2 146 016 beschrieben.

Es ist auch bekannt, die Arbeitsmembran und die Sicherheitsmembran zu einer einzigen Membran mit mehreren Membranlagen zusammenzufassen. Ein frühes Beispiel hierfür ist in der DE 710 320 beschrieben. Die Membran umfasst dabei wenigstens zwei Lagen, die einer Arbeitsmembran und einer Sicherheitsmembran entsprechen. Beim Bruch der Lage, welche der Arbeitsmembran entspricht, durchdringt das Fördermedium nur diese Lage, wogegen die weitere Lage, die der Sicherheitsmembran entspricht, unversehrt bleibt und die Dichtigkeit der Pumpe garantiert. Das Medium füllt im Falle eines Bruchs den Zwischenraum zwischen den beiden Lagen, der dabei mit dem Förderdruck beaufschlagt wird.

Obwohl die Membranpumpe mit einer mehrlagigen Sicherheitsmembran im Fall eines Membranbruchs in der Regel für einen Zeitraum weiterhin funktionsfähig bleibt, muss die Membran dennoch bei nächster Gelegenheit ausgetauscht werden. Wenn der Membranbruch einer Lage unerkannt bleibt und bei weiterem Betrieb auch die weitere(n) Lage(n) bricht bzw. brechen, wird die Pumpe undicht und Fördermedium dringt in den dafür nicht vorgesehenen Raum der Pumpe ein.

Die DE 39 31 516 beschreibt eine Membranbrucherkennung, bei der das Fluid bei einem Membranbruch zwischen der Arbeitsmembran und der Sicherheitsmembran in das Pumpengehäuse und weiter nach außen geführt wird, wo eine Anzeigeeinrichtung für die Anzeige eines Membranbruchs vorgesehen ist. Die Anzeigeeinrichtung kann ein Manometer, ein elektrischer Membranschalter oder eine hydraulisch-mechanische Anzeigeeinrichtung sein, bei welcher der Druck des Mediums einen Stempel aus einem Gehäuse drückt, so dass er sichtbar daraus hervorsteht. Nachteilig an diesen Konstruktionen ist, dass sie den Membranbruch nur anzeigen, während die Pumpe in Betrieb ist und einen Druck aufbaut. Wenn ein Membranbruch beim Betrieb der Pumpe angezeigt wird, so schwankt der dafür zur Verfügung stehende Druck mit der Bewegung der Pumpenmembran. Die Anzeige ist dementsprechend unruhig. Wird die Pumpe abgeschaltet, so bleibt auch die Membranbruchanzeige nicht bestehen.

Die EP 1 384 891 beschreibt eine weitere Membranbruchanzeige für eine Membran, aus der bei Membranbruch keine Flüssigkeit austritt. Vielmehr dringt beim Bruch der Membran Flüssigkeit in den Zwischenraum zwischen der Arbeitslage und der Sicherheitslage ein, wird dort in den Randbereich geleitet und wölbt an einer dafür vorgesehenen Stelle die Membran in axialer Richtung auf. An dieser Stelle ist ein Sensor angeordnet, an dem durch die Aufwölbung der Membran ein elektrischer Schalter betätigt wird, der den Membranbruch signalisiert. Nachteilig an dieser Lösung ist vor allem, dass der Detektor relativ teuer ist. Darüber hinaus werden eine elektrische Anzeigeeinrichtung und eine Stromversorgung benötigt, um den Membranbruch anzuzeigen.

Weitere Druckanzeigeeinrichtungen sind in der US-A-4 654 643 und der US-A-5 237 957 offenbart. Der Gegenstand des Patentanspruchs 1 ist in zweiteiliger Form gegenüber der US-A-4654643 abgegrenzt.

Aufgabe der vorliegenden Erfindung ist es daher, eine Anzeigeeinrichtung bereitzustellen, welche die vorgenannten Nachteile des Standes der Technik überwindet, ohne Stromversorgung arbeitet und ohne eine separate elektrische Anzeigeeinrichtung auskommt, die sowohl während des Betriebs einer Membranpumpe als auch bei Stillstand der Membranpumpe einen Membranbruch, oder in einem druckführenden System, beispielsweise in Druckbehältern oder druckführenden Leitungen, einen konstanten Überdruck oder unzulässige Druckschwankungen oder eine Leckage an einem solchen System dauerhaft anzeigt.

Erfindungsgemäß wird diese Aufgabe gelöst durch eine Einrichtung für die Anzeige eines Membranbruchs in einer Membranpumpe oder einer Leckage oder eines Überdrucks in einem druckführenden System mit
einem Anzeigeelement (1),
einer Arretierungseinrichtung (3), die das Anzeigeelement (1) in einer ersten Position, die einen ersten Zustand anzeigt, mittels einer Spanneinrichtung (2) in Richtung einer zweiten Position, die einen zweiten Zustand anzeigt, vorgespannt arretiert hält und
einer Auslöseeinrichtung (4), die für das Lösen der Arretierung zwischen der Arretierungseinrichtung (3) und dem Anzeigeelement (1) vorgesehen ist,
wobei das Anzeigeelement (1), die Arretierungseinrichtung (3) und die Auslöseeinrichtung (4) in einem Gehäuse (5) angeordnet sind,
die Arretierungseinrichtung (3) wenigstens einen Haken (15, 16) aufweist, der mit dem Anzeigeelement (1) für eine Arretierung in der ersten Position in Eingriff bringbar ist,
das Anzeigeelement (1) Ausnehmungen (13) und/oder Anlageflächen für ein Ineingriffbringen mit dem wenigstens einen Haken (15, 16) der Arretierungseinrichtung (3) aufweist,
dadurch gekennzeichnet, dass
die Auslöseeinrichtung (4) von der Spanneinrichtung (2) unter Vorspannung gegen einen Absatz (20) am Boden des Gehäuses (5) gedrückt wird, wobei das gegenüberliegende Ende der Spanneinrichtung (2) an dem Anzeigeelement (1) anliegt und dieses unter Vorspannung in der ersten Position hält.

Durch eine solche Änzeigeeinrichtung wird ein einmal auftretender Membranbruch dauerhaft gespeichert. Das Anzeigeelement befindet sich zunächst im Betrieb der nicht gebrochenen Membran in einer ersten Position. Diese erste Position bezeichnet einen ersten Zustand, bei dem die Membran intakt und nicht gebrochen ist.

Wenn ein Membranbruch auftritt, wird von einem Bereich der Membran eine mechanische Kraft ausgeübt. Dies geschieht vorzugsweise durch Ausdehnung oder Aufwölbung eines Abschnitts der Membran, der auch als Sensorbereich bezeichnet wird, wenn zwischen die Membranlagen nach einem Bruch einer Membranlage Flüssigkeit eindringt. Durch die Ausdehnung oder Aufwölbung des Membranabschnitts übt dieser eine mechanische Kraft aus, die auf die erfindungsgemäße Anzeigeeinrichtung übertragen wird und in der Folge die dauerhafte Anzeige als Signal für einen Membranbruch auslöst.

Die Auslöseeinrichtung der erfindungsgemäßen Einrichtung ist dafür ausgelegt, die Arretierung zwischen der Arretierungseinrichtung und dem Anzeigeelement zu lösen, wenn die Auslöseeinrichtung beispielsweise in Folge eines Membranbruchs mit einer Kraft beaufschlagt und betätigt wird. Das Anzeigeelement ist in der ersten Position mittels einer Spanneinrichtung in Richtung einer zweiten Position vorgespannt. Wenn die Arretierung des Anzeigeelementes gelöst wird, verfährt es daher in die zweite Position, die einen zweiten Zustand anzeigt, der bedeutet, dass die Membran gebrochen ist. Die Spanneinrichtung ist bevorzugt eine Feder, besonders bevorzugt eine Schraubenfeder.

In der zweiten Position verbleibt das Anzeigeelement auch dann, wenn die Pumpe abgestellt wird und der Membranbruch durch den fehlenden Druck nicht mehr für eine Kraftbeaufschlagung des Anzeigeelementes sorgt. In einer Ausführungsform der Erfindung wird das Anzeigeelement in der zweiten Position gehalten, indem die Spanneinrichtung auch in der zweiten Position eine Vorspannung auf das Anzeigeelement in der Bewegungsrichtung von der ersten zur zweiten Position ausübt. Gleichzeitig sind Anschläge vorgesehen, welche die Bewegung des Anzeigeelementes in Vorspannrichtung begrenzen. Alternativ oder gleichzeitig kann in einer weiteren Ausführungsform eine Arretierung des Anzeigeelementes in der zweiten Position vorgesehen sein.

Da die Einrichtung rein mechanisch arbeitet und der Positionswechsel des Anzeigeelements von der ersten Position in die zweite Position eine optisch erfassbare Änderung darstellt, sind keine elektrischen Elemente zwingend erforderlich. Zweckmäßigerweise ist das Anzeigeelement als ein Stift, ein Zylinder oder ein Körper mit mehreckigem Querschnitt ausgebildet. Mit Vorteil ist das Anzeigeelement ganz oder teilweise in einer typischen Signalfarbe, bevorzugt in Signalrot ausgeführt.

Das Anzeigeelement, die Arretierungseinrichtung und die Auslöseeinrichtung sind erfindungsgemäß in einem Gehäuse angeordnet. Dies hat den Vorteil, dass ein einfacher Austausch und eine Vormontage der erfindungsgemäßen Anzeigeeinrichtung möglich sind. Dieses Gehäuse und das Pumpengehäuse der Membranpumpe sind zweckmäßigerweise so ausgestaltet und aufeinander abgestimmt, dass das Gehäuse der erfindungsgemäßen Anzeigeeinrichtung mit dem Pumpengehäuse verbindbar ist. Bevorzugt sind an dem Gehäuse der erfindungsgemäßen Anzeigeeinrichtung und dem Pumpengehäuse aufeinander abgestimmte Gewinde für eine solche Befestigung vorgesehen. In dem Pumpengehäuse ist zweckmäßigerweise von dem Bereich, wo ein Membranbruch eine mechanische Kraftausübung bewirkt, bis zu dem Gehäuse der erfindungsgemäßen Anzeigeeinrichtung eine Durchgangsöffnung, vorzugsweise eine zylindrische Bohrung, vorgesehen, die eine Durchführung eines kraftübertragenden Elementes erlaubt. Alternativ können das Anzeigeelement, die Arretierungseinrichtung und die Auslöseeinrichtung auch in einem entsprechenden Aufnahmeraum im Pumpengehäuse untergebracht sein.

In einer weiteren Ausführungsform der Erfindung ist an dem wenigstens einen Haken der Arretierungseinrichtung eine Aufspreizschräge so angeordnet, dass sie für das Lösen der Arretierung des Anzeigeelements mit einer Berührungsfläche oder Berührungskante an der Auslöseeinrichtung in Anlage tritt. Dies erfolgt in einer bevorzugten Ausführungsform bei einer Bewegung der Auslöseeinrichtung in axialer Richtung.

Das Lösen der Arretierung wird zweckmäßigerweise durch eine radiale Bewegung der Haken aus den entsprechenden Ausnehmungen und/oder Anlageflächen an dem Anzeigeelement erreicht. Wenn die Arretierung durch eine Radialbewegung der Haken nach außen gelöst werden kann, so verläuft die Aufspreizschräge in Bewegungsrichtung der Auslöseeinrichtung von außen nach innen. Alternativ können die Haken in tangentialer Richtung mit den Ausnehmungen und/oder Anlageflächen in Eingriff sein und außer Eingriff gebracht werden. Die Schrägen an den Haken sind dann gegenüber den Aufspreizschrägen für die radiale Bewegung um 90 Grad gedreht und in Umfangsrichtung schräg anlaufend angeordnet.

In einer weiteren Ausführungsform der Erfindung wird das Anzeigeelement in der zweiten Position von der Spanneinrichtung an wenigstens einer Anschlagfläche an der Arretierungseinrichtung vorgespannt gehalten. Dies verhindert, dass das Anzeigeelement in die erste Position zurückfällt.

In einer Ausführungsform kann die Kraftbeaufschlagung von der Membran direkt auf die Auslöseeinrichtung erfolgen. In einer bevorzugten Ausführungsform der Erfindung ist für die Kraftübertragung von der Membran auf die Auslöseeinrichtung jedoch eine Ansteuerungseinrichtung vorgesehen, welche für eine mechanische Kraftübertragung zwischen der Membran, deren Bruch angezeigt werden soll, oder dem druckführenden System und der Auslöseeinrichtung angeordnet und mit der Auslöseeinrichtung mechanisch gekoppelt ist. Die Ansteuerungseinrichtung ist zweckmäßigerweise durch eine Durchgangsöffnung in dem Gehäuse der erfindungsgemäßen Anzeigeeinrichtung hindurchgeführt. Die Ansteuerungseinrichtung bewirkt eine mechanische Kopplung zwischen dem bei einem Bruch aufgewölbten Membranabschnitt und der Auslöseeinrichtung. Bevorzugt ist die Ansteuerungseinrichtung ein im wesentlichen stangenförmiges Bauteil oder enthält ein solches.

In einer weiteren Ausführungsform der Erfindung sind die Ansteuerungseinrichtung und die Auslöseeinrichtung fest miteinander verbunden oder einstückig miteinander ausgebildet. Es ist nicht zwingend erforderlich, dass die Ansteuerungseinrichtung und die Auslöseeinrichtung als zwei oder mehr getrennte oder nicht miteinander verbundene Bauteile ausgebildet sind.

Bei einem einmaligen Auftreten von Druck, der z.B. durch einen Membranbruch hervorgerufen wird, wird die Auslöseeinrichtung betätigt, wodurch der Membranbruch im wesentlichen dauerhaft angezeigt wird, da die Anzeigeeinrichtung eine Speichercharakteristik besitzt, indem sie das Anzeigeelement in der zweiten Position hält, die einen zweiten Zustand signalisiert, der einen Membranbruch, eine Leckage oder einen aufgetretenen Überdruck bedeutet.

Weiterhin erfindungsgemäß ist die Ansteuerungseinrichtung mittels einer Gegendruckeinrichtung, vorzugsweise einer Feder, in der zur Auslöseeinrichtung entgegengesetzten Richtung vorgespannt. Die Gegendruckeinrichtung wirkt der Ansteuerkraft der Membran entgegen. Sie definiert durch ihre Vorspannung einen Schwellenwert für die Ansteuerkraft (Auslösekraft), welchen die Ansteuerkraft überschreiten muss, um eine Bewegung der Ansteuerungseinrichtung zu bewirken. Wenn die Anzeige für Membranbruch eingesetzt wird, muss der Druck in der Membran die Auslösekraft überschreiten. Dies bietet den Vorteil, dass die Anzeigeeinrichtung nicht ausgelöst wird, wenn nur sehr kleine Kräfte auf die Ansteuerungseinrichtung einwirken, wie sie z.B. durch Vibrationen der Pumpe, zulässige Druckschwankungen innerhalb der Membranlage oder andere mechanische Einwirkungen, wie etwa Stöße auf die Pumpe, entstehen können.

In einer weiteren Ausführungsform der Erfindung stellt nicht das Anzeigeelement selbst das optische Signal für einen Membranbruch dar, sondern das Anzeigeelement ist über ein oder mehrere weitere Elemente mit einem Signalgeber mechanisch gekoppelt. Das eine oder die mehreren weiteren Elemente können dabei die optische Anzeigewirkung erzeugen. Dies kann vorteilhaft sein, wenn die Einbauverhältnisse für die Anzeigeeinrichtung beengt sind und dadurch beispielsweise die Positionsveränderung des Anzeigeelementes schlecht sichtbar ist.

Alternativ kann das Anzeigeelement auch einen elektrischen Signalgeber betätigen. Dann kann ein elektrisches Signal elektrisch zu einem Ort fortgeleitet werden, an dem die Position des Anzeigeelements angezeigt wird. Dabei kann das elektrische Signal, das die zweite Position anzeigt, ebenso dauerhaft fortbestehen wie die Anzeige durch das Anzeigeelement selbst, nachdem die Anzeigeeinrichtung einmal betätigt wurde.

Auch wenn die Erfindung hier überwiegend im Zusammenhang mit der Anzeige eines Membranbruchs beschrieben ist, kann die Anzeigeeinrichtung nach der Erfindung auch zur Signalisierung anderer kritischer Funktionszustände verwendet werden, wie z.B. von Überdruck in druckführenden Systemen, zum Beispiel in druckführenden Leitungen oder Druckbehältern, oder in druckführenden oder druckerzeugenden Maschinen, insbesondere in Pumpen. Eine weitere Anwendungsmöglichkeit ist die Anzeige von Leckagen, insbesondere von Dichtungen von Pumpen. Wesentlich ist, dass die Anzeigeeinrichtung als das Signal auslösende Ereignis eine Auslösekraft erfährt. Auch bei diesen Anwendungen wird ein wenigstens einmal aufgetretener kritischer Funktionszustand dauerhaft angezeigt.

Alternativ zu einer Anzeigeeinrichtung mit einer Ansteuerungseinrichtung kann die Auslöseeinrichtung auch direkt durch einen Fluiddruck ausgelöst werden, der die Auslösekraft zur Bewegung der Auslöseeinrichtung erzeugt. Die Ansteuerungseinrichtung entfällt in dieser Ausführung. Die Auslösseinrichtung wird auf der von dem Anzeigeelement abgewandten Seite oder auf einem Teil davon mit Flüssigkeits- oder Gasdruck beaufschlagt, der höher ist, als der Druck auf der dem Anzeigeelement zugewandten Seite der Auslöseeinrichtung. Vorteilhaft ist in dieser Ausführung die Auslöseeinrichtung gegenüber dem Gehäuse oder gegenüber dem Arretierungselement abgedichtet, je nachdem, innerhalb welcher der genannten Komponenten die Auslöseeinrichtung geführt ist.

Damit der auslösende Druck zu der Auslöseeinrichtung geleitet werden kann, ist das Gehäuse vorteilhaft so mit einer Zuleitung an ein druckführendes Element angeschlossen, dass die Druckkammer, die von der Anzeigeeinrichtung abgewandt hinter der Auslöseeinrichtung von dem Gehäuse umschlossen wird, mit dem Druck aus der Zuleitung beaufschlagt wird. Dazu wirkt das Fluid, das den Druck überträgt, vorteilhaft durch die Durchgangsöffnung auf die Auslöseeinrichtung, die in dieser alternativen Ausführung an jeder Stelle des Gehäuses, die die Druckkammer hinter der Anzeigeeinrichtung umschließt, angeordnet sein kann. Die Durchgangsöffnung kann auch selbst die Druckkammer darstellen, zum Beispiel bei Verwendung mit Pumpen mit Membranen von dem Typ, bei dem bei einem Membranbruch der Fluiddruck zwischen die Arbeitslage und die Sicherheitslage der Membran geleitet wird.

Um die Anzeigeeinrichtung nach der Erfindung zur Anzeige von Überdruck einzusetzen, wird sie vorteilhaft mit dem Überlaufanschluss eines Überdruckventils verbunden, das den Druck eines druckführenden Systems begrenzt. Die Verbindung hat vorteilhaft zusätzlich einen Ablauf, damit das Überdruckventil wirksam den Überdruck aus dem druckführenden System abbauen kann. Damit trotzdem der Auslösedruck erreicht wird, der erforderlich ist, um die Auslöseeinrichtung gegen die Vorspannung aus der Spanneinrichtung zu bewegen, kann der Ablauf mit einem Druckbegrenzungsventil versehen sein, das einen Öffnungsdruck hat, der oberhalb des Auslösedrucks der Anzeigeeinrichtung liegt, jedoch niedrig genug ist, um den Abbau des Überdrucks nicht zu behindern. Alternativ kann auch eine nach den genannten Kriterien geeignet ausgelegte Drosselstelle vorgesehen werden, die, wenn sie durchströmt wird, ebenfalls den Druck in der Verbindung ansteigen lässt. Auf diese Weise löst die Anzeigeeinrichtung nach der Erfindung aus, sobald das Überdruckventil aktiv wird und die Verbindung den Auslösedruck erreicht.

Die Anzeigeeinrichtung nach der Erfindung kann auch zur Anzeige einer Leckage eingesetzt werden, zum Beispiel an der Dichtung einer Pumpe. An Dichtungsstellen, an denen Leckagen zu befürchten sind, sind im allgemeinen Abflüsse für das Medium vorgesehen. An einen solchen Abfluss wird die Anzeige nach der Erfindung vorteilhaft so angeschlossen, dass der Druck des austretenden Mediums erhalten bleibt. Damit weiterhin Medium abfließen kann, ist eine Drosselstelle im Ablauf vorgesehen. Eine solche Drosselstelle kann beispielsweise auch die zweite Dichtungsstelle einer zweistufigen Dichtung einer Pumpe sein. Durch die Drosselstelle im Ablauf steigt der Druck in der Verbindung zwischen der Dichtungsstelle und der Drosselstelle mit zunehmender Leckage an. Bei Erreichen eines Auslöseleckstroms, der den Auslösedruck bewirkt, löst die Anzeigeeinrichtung aus, wodurch ein unzulässig hoher Leckstrom angezeigt wird.

Weitere Vorteile, Merkmale und Anwendungsmöglichkeiten der Erfindung ergeben sich aus der folgenden Beschreibung bevorzugter Ausführungsformen und auch aus den dazugehörigen Figuren.
- Figur 1: zeigt im Schnitt eine Darstellung einer Einbausituation der Anzeigeeinrichtung nach der Erfindung in einer Membranpumpe als Ausbruch;
- Figur 2: zeigt eine Explosionsdarstellung der Anzeigeeinrichtung nach der Erfindung ohne Ansteuereinrichtung im Längsschnitt;
- Figur 3: zeigt einen Schnitt des Anzeigeelements im Detail;
- Figur 4: zeigt einen Schnitt des Arretierungselements im Detail.
- Figur 5: zeigt ein Schema eines hydraulischen oder pneumatischen Systems in Verbindung mit einer Schnittdarstellung der Anzeigeeinrichtung nach der Erfindung zur Anzeige von Überdruck.

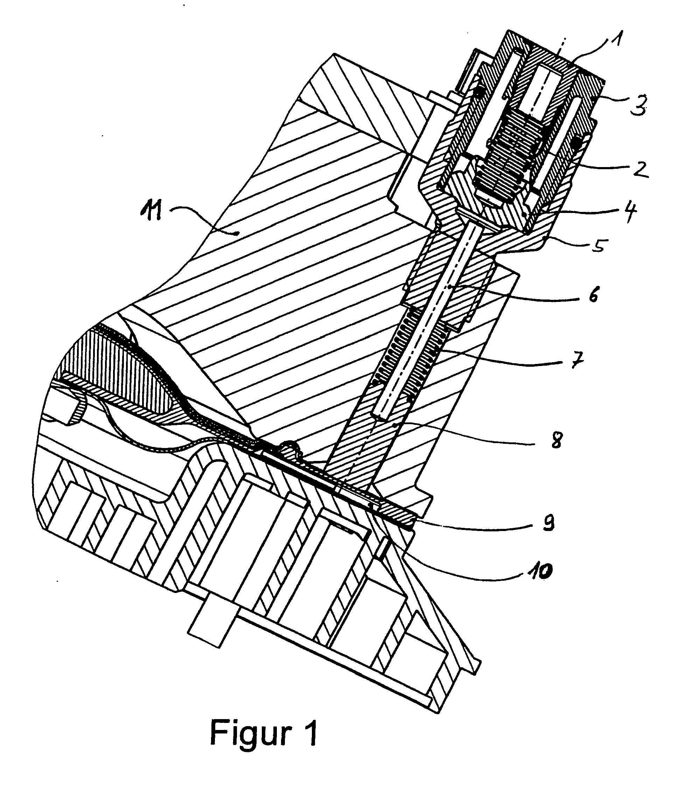

Figur 1 zeigt eine Anzeigeeinrichtung nach der Erfindung, eingebaut in eine Membranpumpe. Dabei handelt es sich um eine Membranpumpe mit einer Membran von dem Typ, bei dem bei einem Membranbruch der Fluiddruck zwischen die Arbeitslage und die Sicherheitslage der Membran geleitet wird und am Rande der Membran in einem sogenannten Sensorbereich zu einer Aufwölbung führt. Diese Aufwölbung bewirkt eine mechanische Kraft, die für die Ansteuerung bzw. das Auslösen der Anzeigeeinrichtung genutzt wird. An dieser Stelle der Aufwölbung ist ein Element der Ansteuereinrichtung, das Druckaufnahmeelement 8, angeordnet und wird durch das Aufwölben der Membran bewegt. Die Bewegung wird über ein weiteres Element der Ansteuereinrichtung, die Druckstange 6, die sich durch das Gehäuse der Pumpe 11 und eine Durchgangsöffnung 25 im Gehäuse 5 der Anzeigeeinrichtung erstreckt, auf die Auslöseeinrichtung 4 übertragen. Die Ansteuereinrichtung umfasst somit die Druckstange 6 und das Druckaufnahmeelement 8.

Die Auslöseeinrichtung 4 wird von der Spanneinrichtung 2 unter Vorspannung gegen den Boden 20 des Gehäuses 5 der Anzeigeeinrichtung gedrückt. Die Spanneinrichtung 2 ist hier als Schraubenfeder ausgestaltet. Das gegenüberliegende Ende der Spanneinrichtung 2 liegt an dem Anzeigeelement 1 an und hält dieses unter Vorspannung in der ersten Position. Das Anzeigeelement 1 wird in dieser Position durch die Arretierungseinrichtung 3 gehalten. Die Arretierungseinrichtung 3 ist mit dem Gehäuse 5 verbunden. Um die Auslöseeinrichtung 4 zu bewegen, muss die Vorspannung durch die Spanneinrichtung 2 überwunden werden.

Die in Figur 1 gezeigte Ausführungsform umfasst außerdem eine Gegendruckeinrichtung 7, die das Druckaufnahmeelement 8 der Ansteuereinrichtung unter Vorspannung gegen den Sensorbereich der Membran hält. Die Gegendruckeinrichtung 7 ist in dieser Ausführung als Schraubenfeder ausgeführt. Eine Aufwölbung der Membran 9, eine Bewegung der Ansteuereinrichtung in Richtung der Auslöseeinrichtung 4 und ein Lösen der Arretierung des Anzeigeelementes 1 sind daher erst möglich, wenn der Druck zwischen den beiden Lagen der Membran ausreichend groß ist, dass die daraus resultierende Kraft auf das Druckaufnahmeelement 8 genügt, um die Summe der Vorspannkräfte der Gegendruckeinrichtung 7 und der Spanneinrichtung 2 zu überwinden.

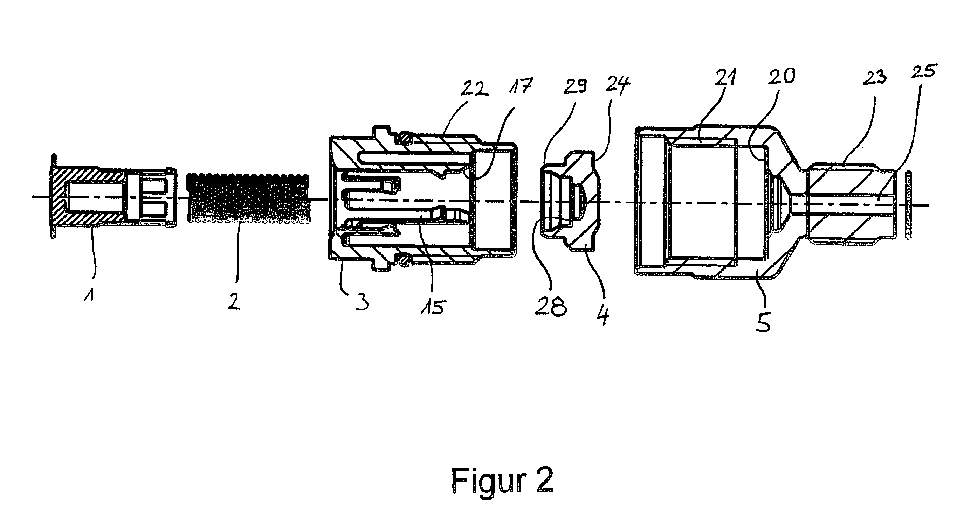

Figur 2 ist eine Explosionsdarstellung der erfindungsgemäßen Anzeigeeinrichtung gemäß Figur 1. Erkennbar ist in dieser Darstellung, dass an dem äußeren Ende des Anzeigeelementes 1 ein nach außen abstehender, tellerartiger Rand vorgesehen ist, der die sichtbare Fläche des Anzeigeelements 1 vergrößert, eine Schutzfunktion gegen äußere Einflüsse darstellt, wobei er insbesondere das Eindringen von Schmutz, Staub, Flüssigkeiten und dergleichen in das Innere der Anzeigeeinrichtung insbesondere in der ersten Position erschwert, und des weiteren einen die Einschubtiefe begrenzenden Anschlag für das Eindrücken des Anzeigeelements 1 aus der zweiten Position in die erste Position bereitstellt. Am anderen Ende des Anzeigeelements 1 ist innen eine zylinderförmige konzentrische Aussparung vorgesehen, in die die Spanneinrichtung 2 eingesetzt wird. Die Anlagefläche für die Spanneinrichtung 2 ist im Inneren des Anzeigeelements 1 angeordnet. Die Spanneinrichtung 2 ist als Schraubenfeder ausgeführt.

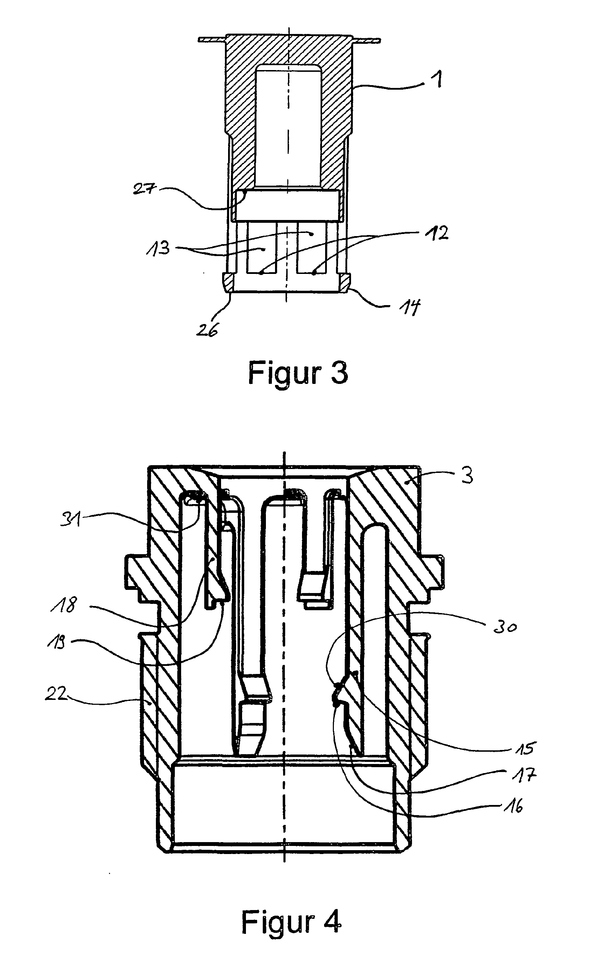

Die Arretierungseinrichtung 3 ist im Wesentlichen zylindrisch ausgebildet mit einem lichten Innendurchmesser, der bis auf die Haken 15, 16 und 18, 19 größer ist als der Außendurchmesser des zylindrischen Teils der Spanneinrichtung 2. Dadurch kann sich die Spanneinrichtung 2 vollständig durch das Innere der Arretierungseinrichtung 3 erstrecken. Die Spanneinrichtung 2 liegt mit einem Endabschnitt an der Auslöseeinrichtung 4 an, welche hierfür eine Aufnahmeausnehmung und eine passende Auflagefläche 28 aufweist. Die Auslöseeinrichtung 4 weist eine konisch zulaufende Mantelfläche auf. An den Enden der Haken sind schräge Aufspreizflächen 17 vorgesehen, die mit einer Berührungskante oder Berührungsfläche 29 an der konisch zulaufenden Mantelfläche der Auslöseeinrichtung 4 in Anlage kommen, wenn die Auslöseeinrichtung 4 in Richtung des Anzeigeelementes 1 bewegt wird. Dabei biegt sie die Haken federeleastisch radial nach außen auf, wodurch die Auflageflächen 16 der Haken nach außen bewegt werden. Wenn diese im Eingriff mit dem Anzeigeelement 1 stehen, wird durch diese Bewegung der Auslöseeinrichtung 4 der Formschluss zwischen den Haken und dem Anzeigeelement 1 gelöst. Die Arretierungseinrichtung 3 ist in Figur 4 größer nochmals dargestellt. Die Auslöseeinrichtung 4 kommt mit einer Andruckfläche 24 an einem Absatz 20 am Boden des Gehäuses 5 der Anzeigeeinrichtung zu liegen. Die Arretierungseinrichtung 3 ist über ein Außengewinde 22 mit dem Innengewinde 21 des Gehäuses 5 verschraubt. Das Gehäuse 5 weist weiterhin ein Gewinde 23 auf, mit dem die Anzeigeeinrichtung in das Gehäuse 11 einer Membranpumpe eingeschraubt werden kann. Weiter weist das Gehäuse 5 eine Durchgangsöffnung 25 auf, durch welche die Druckstange 6 der Ansteuereinrichtung durch das Gehäuse 5 treten und die Auslöseeinrichtung 4 bewegen kann.

Figur 3 zeigt einen Schnitt durch das zylinderförmige Anzeigeelement 1. In der dargestellten Ausführungsform sind sechs Ausnehmungen 13 mit Randbereichen 12 für einen Eingriff mit Haken der Arretierungseinrichtung 3 vorgesehen. Das der Arretierungseinrichtung 3 zugewandte Ende des Anzeigeelements 1 besitzt eine konisch zulaufende Mantelfläche bzw. eine Fase 14 als Gleitfläche. Diese Fase 14 dient dazu, beim Eindrücken des Anzeigeelements 1 in die Arretierungseinrichtung 3 die Haken an dafür vorgesehenen schrägen Gleitflächen 30, die in Fig. 4 unterhalb der Auflageflächen 16 dargestellt sind, aufzubiegen. Dadurch gleiten die Haken an dem geschlossenen Bereich unterhalb der Fase 14 vorbei, bevor der Formschluss zwischen den Auflageflächen 16 und den Randbereichen 13 des Anzeigeelements 1 hergestellt wird. Die Fase 14 ist deshalb vorteilhaft, weil durch die Entschärfung der Kante eine geringere Flächenpressung zwischen den Gleitflächen 30 der Haken und dem Anzeigeelement 1 auftritt.

Figur 4 zeigt einen Querschnitt der Arretierungseinrichtung 3, die in dieser Ausführungsform zwei verschieden Typen von Haken aufweist, die sich in der Länge des sich von der Innenkante des Bundes 31 in axialer Richtung erstreckenden federelastischen Abschnitts unterscheiden. Die Haken mit den längeren federelastischen Abschnitten 15 dienen der Arretierung in der ersten Position, wobei die Auflageflächen 16 der Haken mit den Randbereichen 12 der Ausnehmungen 13 des Anzeigeelements 1 in Eingriff treten. Die Haken mit den kürzeren federelastischen Abschnitten 18 dienen der Arretierung in der zweiten Position nach dem Auslösen z.B. durch einen Membranbruch. Nach dem Auslösen drückt die Spanneinrichtung 2 das Anzeigeelement 1 so weit vor, bis es mit dem Randbereich 12 der Ausnehmungen 13 an den Flächen 19 der drei kurzen Haken anliegt. Diese Flächen 19 dienen als Anschlag für das Anzeigeelement 1 in der zweiten Position. Durch die verbleibende Vorspannung in dem Spannelement 2 ist das Anzeigeelement 1 in dieser Position fixiert, wodurch eine sichere, stehende Anzeige auch bei z. B. Vibrationen gewährleistet ist. Vorzugsweise sind für jede Position drei Haken vorgesehen, da durch die drei Auflagestellen je Hakenart eine Position im Raum in allen sechs Freiheitsgraden definiert ist. Mehr Haken erhöhen dagegen den Herstellungsaufwand.

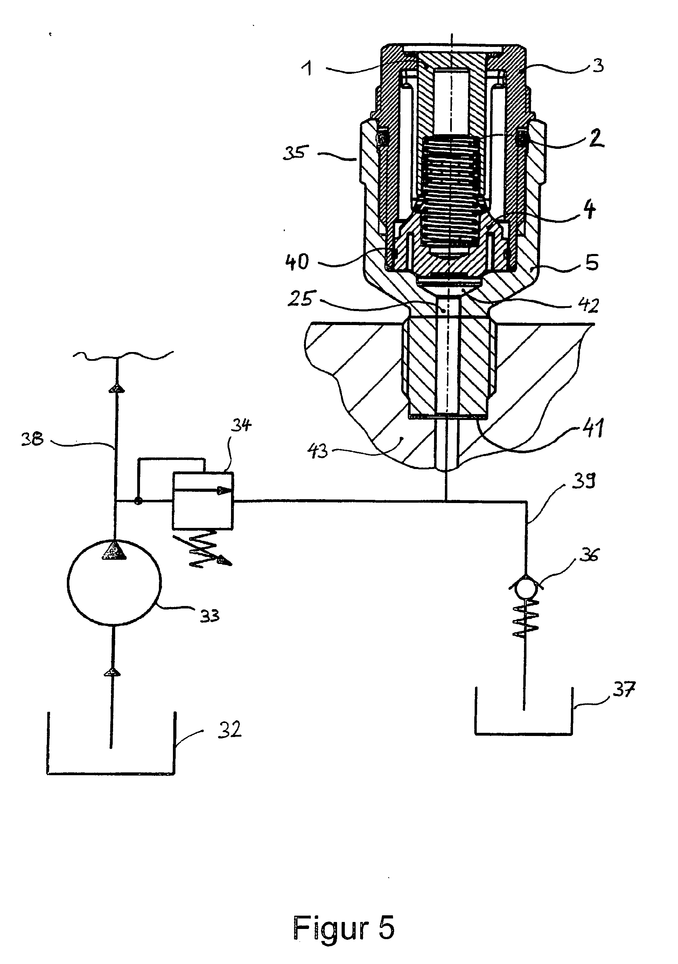

In Figur 5 ist ein druckführendes System gezeigt, bei dem die Anzeigeeinrichtung nach der Erfindung zur Anzeige eines einmal aufgetretenen Überdrucks eingesetzt wird. Die Figur umfasst neben der im Schnitt dargestellten Anzeigeeinrichtung auch ein fluidtechnisches Schaltbild mit einer Pumpe 33 zur Förderung eines Fluids aus einem Reservoir 32 über eine Leitung 38 zu einem Verbraucher, der im Schaltbild nicht dargestellt ist. An der Leitung 38 befindet im Nebenschluß ein Überdruckventil 34, dessen Ausgang über eine Überlaufleitung 39 mit einem Druckbegrenzungsventil 36 verbunden ist. Fluid, das das Druckbegrenzungsventil 36 passiert, wird im Behälter 37 aufgefangen. An der Überlaufleitung 39 ist außerdem eine alternative Ausführungsform der Anzeigeeinrichtung 35 nach der Erfindung angeschlossen. Im Gegensatz zu der zuvor beschriebenen Ausführungsform ist an der Anzeigeeinrichtung keine Ansteuerungseinrichtung für die Auslöseeinrichtung 4 vorgesehen. An der Auslöseeinrichtung 4 ist in einer umlaufenden Nut eine Dichtung 40 angeordnet. Diese dichtet die Auslöseeinrichtung 4 gegenüber der Arretierungseinrichtung 3 ab, wobei die Dichtung verschiebbar ist und beim Verschieben der Auslöseeinrichtung 4 wirksam bleibt. Die übrigen elementaren Komponenten der Anzeigeeinrichtung 35, nämlich das Anzeigeelement 1, die Spanneinrichtung 2, das Arretierungselement 3 und das Gehäuse 5, entsprechen im wesentlichen unverändert denjenigen der zuvor beschriebenen Ausführungsform. Die Anzeigeeinrichtung 35 ist gegenüber einem druckführenden Element 43, in dem sich die Druckzuführung befindet, abgedichtet eingebaut. Dazu ist ein Dichtring 41 zwischen die Stirnseite des Anschlussstutzens des Gehäuses 5 und dem Grund einer Stimsenkung in dem Element 43 vorgesehen. Alternativ kann ein abdichtendes Gewinde an dem Gehäuse 5 und in einem entsprechenden Gegengewinde in der Bohrung oberhalb der Stimsenkung verwendet werden.

Wenn ein Betriebszustand eintritt, in dem auf der Druckleitung 38 ein Überdruck auftritt, so gibt das Überdruckventil 34 den Durchtritt von der Druckleitung 38 in die Überlaufleitung 39 frei. Das Druckbegrenzungsventil 36 hat einen Öffnungsdruck, was bedeutet, dass sich in der Überlaufleitung 39 ein Druck bis zu dem Öffnungsdruck aufbaut, bevor das Druckbegrenzungsventil öffnet. Der Druck auf der Überlaufleitung 39 gelangt durch die Durchgangsöffnung 25 in die Druckkammer 42, die auf der Seite der Auslöseeinrichtung 4 angeordnet ist, die von der Spanneinrichtung 2 abgewandt ist. Die Dichtung 40 verhindert, dass das Fluid den Raum 42 verlässt. Der Druck wirkt dadurch gegen die Spanneinrichtung 2 und löst die Anzeige aus, wenn er die Vorspannung der Spanneinrichtung 2 überwindet. Der Öffnungsdruck des Druckbegrenzungsventils 36 ist so ausgelegt, dass er ausreicht, um die Kraft aufzubringen, mit der die Anzeigeeinrichtung ausgelöst werden kann, und er ist kleiner als der Öffnungsdruck des Überdruckventils gewählt.

In einer alternativen Ausführung wird statt einem Überdruck mit der Anzeigeeinrichtung eine übermäßige Leckage detektiert. Dies kann beispielsweise an Pumpen sinnvoll sein. Austretendes Fluid wird üblicherweise in einem Auffangraum gesammelt und von dort aus der Pumpe weggeleitet. Wenn der Auffangraum druckdicht ausgeführt ist und die Ableitung den Druck weiterleiten kann, dann kann in die Ableitung eine weitere Drosselstelle eingebaut werden, was dazu führt, dass in der Ableitung zwischen der leckenden Dichtungsstelle und der Drossel ein Druck in Abhängigkeit des Leckagestroms aufgebaut wird. An dieses Stück der Ableitung wird die Anzeigeeinrichtung in der zuletzt beschriebenen alternativen Ausführung angeschlossen, die so eingestellt ist, dass sie bei einem unzulässig hohen Leckagestrom, der zu einem Auslösedruck führt, auslöst.

Alternativ kann die Anzeigeeinrichtung zur Anzeige von Leckage in einem System mit zwei hintereinandergeschalteten Dichtungen zwischen den beiden Dichtungen angeschlossen werden. Die erste Dichtung entspricht dann der Dichtung in der zuvor beschriebenen Ausführung, und die zweite Dichtung der Drossel.

### Bezugzeichenliste

- **1**: Anzeigeelement
- **2**: Spanneinrichtung
- **3**: Arretierungseinrichtung
- **4**: Auslöseeinrichtung
- **5**: Gehäuse
- **6**: Druckstange
- **7**: Gegendruckeinrichtung
- **8**: Druckaufnahmeelement
- **9**: Membran
- **10**: Membranhohlraum
- **11**: Pumpengehäuse
- **12**: Randbereich der Ausnehmung
- **13**: Ausnehmung
- **14**: Fase
- **15**: Federelastischer Abschnitt
- **16**: Auflagefläche
- **17**: Aufspreizschräge
- **18**: Stütze
- **19**: Anschlagfläche
- **20**: Absatz
- **21**: Innengewinde
- **22**: Außengewinde
- **23**: Gewinde
- **24**: Andruckfläche
- **25**: Durchgangsöffnung
- **26**: Axialfläche
- **27**: Anlagefläche
- **28**: Auflagefläche
- **29**: Berührungskante
- **30**: Gleitfläche
- **31**: Bund
- **32**: Reservoir
- **33**: Pumpe
- **34**: Überdruckventil
- **35**: Anzeigeeinrichtung
- **36**: Druckbegrenzungsventil
- **37**: Behälter
- **38**: Leitung
- **39**: Überlaufleitung
- **40**: Dichtung
- **41**: Dichtring
- **42**: Druckkammer
- **43**: Druckführendes Element

## Patentansprüche

1. Einrichtung für die Anzeige eines Membranbruchs in einer Membranpumpe oder einer Leckage oder eines Überdrucks in einem druckführenden System mit
einem Anzeigeelement (1),
einer Arretierungseinrichtung (3), die das Anzeigeelement (1) in einer ersten Position, die einen ersten Zustand anzeigt, mittels einer Spanneinrichtung (2) in Richtung einer zweiten Position, die einen zweiten Zustand anzeigt, vorgespannt arretiert hält und
einer Auslöseeinrichtung (4), die für das Lösen der Arretierung zwischen der Arretierungseinrichtung (3) und dem Anzeigeelement (1) vorgesehen ist,
wobei das Anzeigeelement (1), die Arretierungseinrichtung (3) und die Auslöseeinrichtung (4) in einem Gehäuse (5) angeordnet sind;
die Arretierungseinrichtung (3) wenigstens einen Haken (15, 16) aufweist, der mit dem Anzeigeelement (1) für eine Arretierung in der ersten Position in Eingriff bringbar ist,
das Anzeigeelement (1) Ausnehmungen (13) und/oder Anlageflächen für ein Ineingriffbringen mit dem wenigstens einen Haken (15, 16) der Arretierungseinrichtung (3) aufweist, **dadurch gekennzeichnet, dass**
die Auslöseeinrichtung (4) von der Spanneinrichtung (2) unter Vorspannung gegen den Boden (20) des Gehäuses (5) gedrückt wird, wobei das gegenüberliegende Ende der Spanneinrichtung (2) an dem Anzeigeelement (1) anliegt und dieses unter Vorspannung in der ersten Position hält.

2. Anzeigeeinrichtung nach Anspruch 1, **dadurch gekennzeichnet, dass** an dem wenigstens einen Haken (15, 16) der Arretierungseinrichtung (3) eine Aufspreizschräge (17) so angeordnet ist, dass sie für das Lösen der Arretierung des Anzeigeelements (1) mit einer Berührungsfläche oder Berührungskante (29) an der Auslöseeinrichtung (4) in Anlage tritt.

3. Anzeigeeinrichtung nach einem der vorangehenden Ansprüche, **dadurch gekennzeichnet, dass** das Anzeigeelement (1) in der zweiten Position von der Spanneinrichtung (2) an wenigstens einer Anschlagflächen (19) an der Arretierungseinrichtung (3) vorgespannt gehalten wird.

4. Anzeigeeinrichtung nach einem der vorangehenden Ansprüche, **dadurch gekennzeichnet, dass** weiterhin eine Ansteuerungseinrichtung (6, 8) vorgesehen ist, welche für eine mechanische Kraftübertragung zwischen der Membran, deren Bruch angezeigt werden soll, oder dem druckführenden System und der Auslöseeinrichtung (4) angeordnet und mit der Auslöseeinrichtung (4) mechanisch gekoppelt ist, und die Ansteuerungseinrichtung (6, 8) durch eine Durchgangsöffnung (25) in dem Gehäuse (5) hindurchgeführt ist.

5. Anzeigeeinrichtung nach Anspruch 4, **dadurch gekennzeichnet, dass** die Ansteuerungseinrichtung (6, 8) und die Auslöseeinrichtung (4) fest miteinander verbunden oder einstückig miteinander ausgebildet sind.

6. Anzeigeeinrichtung nach einem der Ansprüche 4 oder 5, **dadurch gekennzeichnet, dass** die Ansteuerungseinrichtung (6, 8) mittels einer Gegendruckeinrichtung (7) in der zur Auslöseeinrichtung (4) entgegengesetzten Richtung vorgespannt ist.

7. Anzeigeeinrichtung nach einem der vorangehenden Ansprüche, **dadurch gekennzeichnet, dass** das Anzeigeelement (1) mit einem elektrischen Signalgeber verbunden ist, der in der ersten Position des Anzeigeelements (1) ein anderes elektrisches Signal bewirkt, als in der zweiten Position des Anzeigeelements (1).

8. Anzeigeeinrichtung nach einem der Ansprüche 1 bis 3, **dadurch gekennzeichnet, dass** das Gehäuse (5) an ein druckführendes Element (43) so angeschlossen ist, dass eine Druckkammer (42) von dem Fluid in dem druckführenden Element (43) unter Druck gesetzt wird, und somit die Auslöseeinrichtung (4) ansteuert.

9. Anzeigeeinrichtung nach Anspruch 8, **dadurch gekennzeichnet, dass** die zwischen der Auslöseeinrichtung (4) und der Arretierungseinrichtung (3) oder zwischen der Auslöseeinrichtung (4) und dem Gehäuse (5) eine bewegliche Dichtung (40) vorgesehen ist.

10. Membranpumpe, **dadurch gekennzeichnet, dass** sie mit einer Anzeigeeinrichtung nach einem der vorangehenden Ansprüche ausgestattet ist.

11. Druckführendes System mit einer Anzeigeeinrichtung nach Anspruch 8 oder 9, wobei die Auslöseeinrichtung (4) mit dem Überlaufanschluss eines Überdruckventils (34) mit einer Druck übertragenden Verbindung (39, 25, 42) verbunden ist.

12. Druckführendes System mit einer Anzeigeeinrichtung nach Anspruch 8, wobei die Auslöseeinrichtung (4) mit dem Überlauf aus einem Dichtspalt mit einer Druck übertragenden Verbindung (39, 25, 42) verbunden ist.

## Claims

1. A device for displaying a diaphragm rupture in a diaphragm pump or a leak or an excess pressure in a pressure-carrying system comprising
a display element (1),
an arresting device (3) which holds the display element (1) arrested in a first position which displays a first condition biased by means of a biasing device (2) in the direction of a second position which displays a second condition, and
a triggering device (4) provided for releasing the arresting action between the arresting device (3) and the display element (1),
wherein the display element (1), the arresting device (3) and the triggering device (4) are arranged in a housing (5),
the arresting device (3) has at least one hook (15, 16) which can be brought into engagement with the display element (1) for arresting in the first position,
the display element (1) has openings (13) and/or contact surfaces for being brought into engagement with the at least one hook (15, 16) of the arresting device (3),
**characterised in that**
the triggering device (4) is urged in a biased condition by the biasing device (2) towards the end (20) of the housing (5), wherein the opposite end of the biasing device (2) bears against the display element (1) and holds it in a biased condition in the first position.

2. A display device according to claim 1 **characterised in that** an inclined spreading means (17) is arranged on the at least one hook (15, 16) of the arresting device (3) in such a way that for releasing the arresting action of the display element (1) it comes into contact with a contact surface or contact edge (29) at the triggering device (4).

3. A display device according to one of the preceding claims **characterised in that** the display element (1) is held in a biased condition in the second position by the biasing device (2) against at least one contact surface (19) on the arresting device (3).

4. A display device according to one of the preceding claims **characterised in that** there is further provided an actuating device (6, 8) which is arranged for mechanical transmission of force between the diaphragm, the rupture of which is to be displayed, or the pressure-carrying system and the triggering device (4) and is mechanically coupled to the triggering device (4), and the actuating device (6, 8) is passed through a through opening (25) in the housing (5).

5. A display device according to claim 4 **characterised in that** the actuating device (6, 8) and the triggering device (4) are fixedly connected together or are formed in one piece with each other.

6. A display device according to one of claims 4 and 5 **characterised in that** the actuating device (6, 8) is biased by means of a counter-pressure device (7) in the direction opposite to the triggering device (4).

7. A display device according to one of the preceding claims **characterised in that** the display element (1) is connected to an electric signal generator which in the first position of the display element (1) produces a different electric signal than in the second position of the display element (1).

8. A display device according to one of claims 1 to 3 **characterised in that** the housing (5) is so connected to a pressure-bearing element (43) that a pressure chamber (42) is put under pressure by the fluid in the pressure-carrying element (43) and thus actuates the triggering device (4).

9. A display device according to claim 8 **characterised in that** a movable seal (40) is provided between the triggering device (4) and the arresting device (3) or between the triggering device (4) and the housing (5).

10. A diaphragm pump **characterised in that** it is equipped with a display device according to one of the preceding claims.

11. A pressure-carrying system having a display device according to claim 8 or claim 9, wherein the triggering device (4) is connected to the overflow connection of an over-pressure valve (34) with a pressure-transmitting communication (39, 25, 42).

12. A pressure-carrying system having a display device according to claim 8, wherein the triggering device (4) is connected to the overflow from a sealing gap with a pressure-transmitting communication (39, 25, 42).

## Revendications

1. Dispositif pour l'affichage d'une rupture de diaphragme dans une pompe à diaphragme ou d'une fuite ou d'une surpression dans un système conduisant la pression, comprenant
un élément d'affichage (1),
un dispositif d'arrêt (3) qui maintient bloqué l'élément d'affichage (1) de manière précontrainte dans une première position, laquelle affiche un premier état, au moyen d'un dispositif de serrage (2) dans la direction d'une seconde position, laquelle affiche un second état, et
un dispositif de déclenchement (4) prévu pour libérer le blocage entre le dispositif d'arrêt (3) et l'élément d'affichage (1),
l'élément d'affichage (1), le dispositif d'arrêt (3) et le dispositif de déclenchement (4) étant disposés dans un carter (5),
le dispositif d'arrêt (3) comportant au moins un crochet (15, 16) pouvant être mis en prise avec l'élément d'affichage (1) pour un blocage dans la première position,
l'élément d'affichage (1) présentant des évidements (13) et/ou des surfaces d'appui pour une mise en prise avec le crochet (15, 16), au moins au nombre de un, du dispositif d'arrêt (3),
**caractérisé en ce que**
le dispositif de déclenchement (4) est pressé par le dispositif de serrage (2) par précontrainte contre le fond (20) du carter (5), l'extrémité opposée du dispositif de serrage (2) s'appuyant contre l'élément d'affichage (1) et maintenant celui-ci par précontrainte dans la première position.

2. Dispositif d'affichage selon la revendication 1, **caractérisé en ce qu'**est disposée sur le crochet (15, 16), au moins au nombre de un, du dispositif d'arrêt (3), une surface oblique d'écartement (17) de façon telle que celle-ci vient s'appuyer contre une surface de contact ou un bord de contact (29) du dispositif de déclenchement (4) pour libérer le blocage de l'élément d'affichage (1).

3. Dispositif d'affichage selon l'une des revendications précédentes, **caractérisé en ce que** l'élément d'affichage (1) est maintenu précontraint dans la seconde position par le dispositif de serrage (2) contre au moins une surface de butée (19) au niveau du dispositif d'arrêt (3).

4. Dispositif d'affichage selon l'une des revendications précédentes, **caractérisé en ce qu'**est prévu, en outre, un dispositif de commande (6, 8) qui est disposé, pour une transmission de force mécanique, entre le diaphragme, dont la rupture doit être affichée, ou le système conduisant la pression et le dispositif de déclenchement (4) et qui est couplé mécaniquement au dispositif de déclenchement (4), et **en ce que** le dispositif de commande (6, 8) passe à travers une ouverture de passage (25) ménagée dans le carter (5).

5. Dispositif d'affichage selon la revendication 4, **caractérisé en ce que** le dispositif de commande (6, 8) et le dispositif de déclenchement (4) sont reliés de manière solidaire entre eux ou sont réalisés d'une seule pièce.

6. Dispositif d'affichage selon l'une des revendications 4 ou 5, **caractérisé en ce que** le dispositif de commande (6, 8) est précontraint au moyen d'un dispositif de contre-pression (7) dans la direction opposée au dispositif de déclenchement (4).

7. Dispositif d'affichage selon l'une des revendications précédentes, **caractérisé en ce que** l'élément d'affichage (1) est relié à un capteur de signaux électrique qui produit, dans la première position de l'élément d'affichage (1), un autre signal électrique que dans la seconde position de l'élément d'affichage (1).

8. Dispositif d'affichage selon l'une des revendications 1 à 3, **caractérisé en ce que** le carter (5) est raccordé à un élément conduisant la pression (43) de façon telle qu'une chambre de pression (42) est mise sous pression par le fluide dans l'élément conduisant la pression (43), et commande ainsi le dispositif de déclenchement (4).

9. Dispositif d'affichage selon la revendication 8, **caractérisé en ce qu'**est prévu un joint d'étanchéité mobile (40) entre le dispositif de déclenchement (4) et le dispositif d'arrêt (3) ou entre le dispositif de déclenchement (4) et le carter (5).

10. Pompe à diaphragme, **caractérisée en ce qu'**elle est équipée d'un dispositif d'affichage selon l'une des revendications précédentes.

11. Système conduisant la pression, pourvu d'un dispositif d'affichage selon la revendication 8 ou 9, dans lequel le dispositif de déclenchement (4) est relié à un raccord de transmission de pression (39, 25, 42) via le raccord de trop-plein d'une soupape de surpression (34).

12. Système conduisant la pression, pourvu d'un dispositif d'affichage selon la revendication 8, dans lequel le dispositif de déclenchement (4) est relié à un raccord de transmission de pression (39, 25, 42) via le trop-plein sortant d'une fente d'étanchéité.
